(19) Europäisches Patentamt / European Patent Office / Office européen des brevets

(11) **EP 3 060 525 B1**

(12) **FASCICULE DE BREVET EUROPEEN**

(45) Date de publication et mention de la délivrance du brevet:
**08.11.2017 Bulletin 2017/45**

(21) Numéro de dépôt: **14793475.6**

(22) Date de dépôt: **22.10.2014**

(51) Int Cl.:
*C01G 43/00* (2006.01)      *C01G 56/00* (2006.01)
*G21C 3/62* (2006.01)

(86) Numéro de dépôt international:
**PCT/EP2014/072647**

(87) Numéro de publication internationale:
**WO 2015/059188 (30.04.2015 Gazette 2015/17)**

(54) **PROCEDE DE PREPARATION D'UNE POUDRE COMPRENANT UNE SOLUTION SOLIDE DE DIOXYDE URANIUM ET D'AU MOINS UN AUTRE ELEMENT ACTINIDE ET/OU LANTHANIDE**

VERFAHREN ZUR HERSTELLUNG EINES PULVERS MIT EINER FESTEN LÖSUNG AUS URANDIOXID UND EINEM DIOXID MINDESTENS EINES ANDEREN AKTINID- UND/ODER LANTHANIDELEMENTS

PROCESS FOR PREPARING A POWDER COMPRISING A SOLID SOLUTION OF URANIUM DIOXIDE AND OF A DIOXIDE OF AT LEAST ONE OTHER ACTINIDE AND/OR LANTHANIDE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2013 FR 1360294**

(43) Date de publication de la demande:
**31.08.2016 Bulletin 2016/35**

(73) Titulaires:
• **Commissariat à l'Énergie Atomique et aux Énergies Alternatives 75015 Paris (FR)**
• **AREVA NC 92400 Courbevoie (FR)**

(72) Inventeurs:
• **PETER-SOLDANI, Guillaume 13080 Luynes (FR)**
• **GRANDJEAN, Stéphane F-30330 Saint-Marcel de Careiret (FR)**
• **ABRAHAM, Francis F-59242 Genech (FR)**

(74) Mandataire: **Brevalex 95, rue d'Amsterdam 75378 Paris Cedex 8 (FR)**

(56) Documents cités:
• **HRUDANANDA JENA ET AL: "Combustion synthesis and thermal expansion measurements of the rare earth-uranium ternary oxides RE6UO12 (RE=La, Nd and Sm)", JOURNAL OF NUCLEAR MATERIALS, vol. 280, no. 3, 28 juillet 2000 (2000-07-28), pages 312-317, XP055122731, ISSN: 0022-3115, DOI: 10.1016/S0022-3115(00)00055-6**
• **S ANTHONYSAMY ET AL: "Combustion synthesis of urania-thoria solid solutions", JOURNAL OF NUCLEAR MATERIALS, vol. 278, no. 2-3, 21 février 2000 (2000-02-21), pages 346-357, XP055122732, ISSN: 0022-3115, DOI: 10.1016/S0022-3115(99)00267-6 cité dans la demande**
• **HWANG C-C ET AL: "Development of a novel combustion synthesis method for synthesizing of ceramic oxide powders", MATERIALS SCIENCE AND ENGINEERING B, ELSEVIER SEQUOIA, LAUSANNE, CH, vol. 111, no. 1, 15 août 2004 (2004-08-15), pages 49-56, XP004517041, ISSN: 0921-5107, DOI: 10.1016/J.MSEB.2004.03.023**
• **V. CHANDRAMOULI ET AL: "Combustion synthesis of thoria - a feasibility study", JOURNAL OF NUCLEAR MATERIALS, vol. 265, no. 3, 17 février 1999 (1999-02-17), pages 255-261, XP055122757, ISSN: 0022-3115, DOI: 10.1016/S0022-3115(98)00688-6**

**Description**

**DOMAINE TECHNIQUE**

L'invention a trait à un procédé innovant de préparation d'une poudre comprenant une solution solide de dioxyde d'uranium et d'au moins un autre élément actinide et/ou lanthanide à partir de solutions nitrates, ladite poudre étant utilisable pour la fabrication de combustibles nucléaires, tels que les combustibles MOX (**M**ixed **OX**ide Fuel).

Du fait qu'il met en jeu des solutions nitrates, le procédé peut s'inscrire dans le processus plus général de recyclage des combustibles usés, impliquant une étape de dissolution de ces derniers par de l'acide nitrique pour former des nitrates.

Plus spécifiquement, le processus peut s'inscrire dans le processus de recyclage du plutonium voire des actinides mineurs issus des combustibles usés à base d'uranium.

**ÉTAT DE LA TECHNIQUE ANTÉRIEURE**

Dans les pays ayant opté pour un cycle fermé, le plutonium issu des combustibles usés à base d'uranium est recyclé à l'échelle industrielle, en vue de fabriquer des combustibles à base d'oxyde mixte d'uranium et de plutonium, dénommés MOX et destinés à des réacteurs à eau légère (connus sous l'abréviation REL).

Les matériaux de base pour fabriquer les combustibles nucléaires sont des poudres d'oxyde destinées à être compactées puis frittées et éventuellement rectifiées en vue de constituer des pastilles de combustible nucléaire.

Ainsi, pour la fabrication des combustibles, les poudres utilisées doivent répondre à des caractéristiques précises. Elles doivent présenter, notamment, une bonne aptitude à l'écoulement, de bonnes caractéristiques de compressibilité et une aptitude à la densification par frittage. Qui plus est, un critère important de qualité dans les propriétés finales des pastilles est l'homogénéité de la répartition des différents éléments chimiques (en l'occurrence, l'uranium et le plutonium pour le MOX) au sein de la poudre utilisée pour la fabrication des pastilles, de sorte à ce que cette homogénéité se retrouve dans les pastilles de combustible. En effet, une homogénéité élevée dans la répartition des éléments au sein des pastilles est, d'une part, tout à fait favorable pour le comportement du combustible (notamment, lorsqu'il s'agit du MOX) en réacteur, notamment dans une perspective d'accroissement des taux de combustion et facilite, d'autre part, la complète dissolution du matériau en tête des opérations de traitement du combustible usé ou lors du recyclage des rebuts de fabrication dans l'optique où ce recyclage est effectué par voie humide.

Pour les combustibles mixtes à base d'oxyde de plutonium, par exemple, ceux du type MOX, l'élaboration de ceux-ci par mélange mécanique de poudres d'oxydes simples (pour le MOX, une poudre de $UO_2$ et une poudre de $PuO_2$) nécessite des mesures de protection renforcée pour gérer les problèmes de prolifération liés notamment à l'utilisation d'oxyde de plutonium simple. Qui plus est, il s'avère difficile d'obtenir un mélange homogène de poudres du point de vue de la répartition des éléments en se basant sur un mélange mécanique des poudres d'oxydes simples.

Pour contourner ces inconvénients, la question s'est posée de fabriquer directement un matériau de départ sous forme d'oxydes mixtes, par exemple, $(U,Pu)O_2$, notamment en procédant à un mélange des éléments chimiques en amont de la fabrication desdits oxydes, ce qui est le cas lorsque ces oxydes mixtes sont préparés par des procédés de co-conversion (dits, également, procédés par précipitation-calcination).

Parmi les procédés de co-conversion déjà mis en oeuvre, on peut citer le procédé de co-précipitation oxalique, le procédé de co-précipitation carbonate ou encore le procédé de co-précipitation ammoniacale.

Pour le procédé de co-précipitation oxalique, comme décrit dans FR 0451058, l'uranium U(VI) et le plutonium Pu(IV) sont préalablement réduits en U(IV) et Pu(III). Au mélange résultant est ajouté de l'acide oxalique, qui engendre un précipité d'oxalate de U(IV)/Pu(III) homogène du point de vue de la répartition des éléments chimiques. Le précipité, après séparation, est ensuite calciné sous atmosphère inerte, qui mène à la formation d'un oxyde mixte parfaitement homogène, qui peut se présenter sous forme d'une solution solide.

Pour le procédé de co-précipitation carbonate, comme décrit dans Transactions of the American Nuclear Society, 40 (1982), 50-52, il consiste en une conversion en oxyde mixte d'un mélange d'ions uranyle et plutonium présents dans une solution d'acide nitrique impliquant une co-précipitation des ions uranyle et plutonium sous forme d'un précipité de carbonate d'uranium et de plutonium et une calcination dudit précipité. De manière plus explicite, l'étape initiale consiste à chauffer la solution nitrique d'uranyle et de plutonium (IV), afin de convertir le plutonium Pu(IV) en Pu(VI). La concentration en acide nitrique de cette solution est ensuite ajustée à environ 1M par une distillation à sec suivie d'une redissolution du résidu dans de l'acide nitrique 1M. La solution résultante est ensuite portée à une température de 60°C et du dioxyde de carbone et de l'ammoniac sont introduits, en vue d'engendrer la précipitation sous forme de carbonate à un pH situé dans une gamme allant de 7 à 9. Le précipité, après séparation, est enfin calciné sous atmosphère contrôlée ($N_2$-3% $H_2$), moyennant quoi il se forme un oxyde mixte sous forme d'une solution solide.

Pour le procédé de co-précipitation ammoniacale, de l'ammoniac est ajouté à la solution initiale d'uranium et de plutonium préalablement portée à une température de 50°C, moyennant quoi il se forme un co-précipité. Après séparation et séchage, le précipité est calciné sous atmosphère réductrice menant à la formation d'un oxyde mixte d'uranium et de plutonium relativement homogène.

Ainsi, en résumé, les procédés de co-conversion susmentionnés comportent au minimum trois étapes :

- une étape de formation d'un précipité mixte à partir d'une solution comprenant des sels d'uranium ;
- une étape de séparation dudit précipité de la solution ; et
- une étape de calcination sous atmosphère contrôlée du précipité ainsi séparé.

Parmi les procédés de co-conversion déjà mis en oeuvre, on peut citer, également, les procédés de co-dénitration thermique. Pour ces procédés, la solution initiale de nitrate d'uranyle et de plutonium est évaporée puis dénitrée thermiquement pour conduire à un mélange d'oxydes ($UO_3$ + $PuO_2$ ou $U_3O_8$+$PuO_2$) sous forme d'une poudre. Cette poudre subit ensuite un nouveau traitement thermique, sous atmosphère réductrice, pour former un oxyde mixte d'uranium et de plutonium sous forme de dioxydes $UO_2$+$PuO_2$.

Ainsi, ces procédés de co-dénitration thermique susmentionnés comportent, au minimum, deux étapes :

- une étape de formation d'un mélange de phases oxydes, dont une phase uranium ne se présentant pas sous forme d'une phase dioxyde ;
- une étape supplémentaire de traitement à haute température sous atmosphère réductrice, pour obtenir l'oxyde mixte d'uranium et de plutonium susmentionné.

D'autres voies de synthèse pour la fabrication de poudres d'oxydes mixtes, ont été explorées, dont, en particulier, la synthèse d'oxydes mixtes par combustion de solution, aussi connue sous le nom de synthèse par combustion auto-propageante.

De manière générale, la synthèse d'oxydes mixtes par combustion de solution implique l'utilisation d'un mélange de nitrates d'éléments métalliques, lesquels servent à la fois de comburant et de source métallique (les éléments métalliques étant ceux destinés à entrer dans la constitution de l'oxyde mixte) et d'un combustible, le tout mélangé en solution. Le mélange susmentionné est soumis, de prime abord, à un chauffage à basse température (par exemple, une température s'échelonnant de 80 à 600°C) *via* une source extérieure (par exemple, un four, une plaque chauffante), en vue d'initier la réaction de combustion puis la réaction de combustion entre le combustible et les espèces oxygénées issues de la décomposition des nitrates (telles que $HNO_3$) permet d'atteindre rapidement de hautes températures (dites températures de flamme pouvant s'échelonner de 600 à 1300°C), qui vont permettre la propagation et le maintien de la réaction de combustion, tant qu'il y a en présence du combustible et du comburant (d'où le caractère auto-propageant de la réaction de combustion).

Cette technique a déjà été mise en oeuvre pour la préparation d'oxydes mixtes comprenant de l'uranium, notamment pour la préparation d'oxydes mixtes $(U,Ce)O_2$ ou $(U,Th)O_2$.

Pour $(U,Ce)O_2$, comme décrit dans Journal of Nuclear Materials, 345, 2005, 245-253, il est procédé à la préparation d'une solution de nitrate de U(VI) et de nitrate de Ce(III) selon un rapport molaire Ce/(U+Ce)=0,28, à laquelle il est ajouté de l'acide citrique (constituant le combustible) selon un rapport molaire (acide citrique/nitrates) égal à 1. Le mélange ainsi obtenu est chauffé par micro-ondes, puis sur plaque chauffante, afin d'achever la combustion. La poudre résultante a ensuite été calcinée à 800°C sous air. Il a été constaté, par analyse par diffraction aux rayons X, qu'à l'issue de la calcination, une poudre constituée d'un mélange de phases ($UO_3$ + $U_3O_8$ + $CeO_2$ + $(U,Ce)O_{2+x}$) est obtenue. Pour obtenir une solution solide $(U,Ce)O_2$, il est nécessaire de compacter la poudre et de fritter l'ensemble à 1600°C sous $Ar/H_2$.

Pour $(U,Th)O_2$, comme décrit dans Journal of Nuclear Materials, 278, 2000, 346-357 une solution de nitrate d'uranium U(VI) et de thorium Th(IV), à laquelle il est ajouté de l'acide citrique, est chauffée par micro-ondes ou sur plaque chauffante, jusqu'à ce que toute la solution soit convertie en une poudre, qui est ensuite calcinée sous air à 700°C pendant 5 heures, en vue d'éliminer le carbone résiduel (de 0,2 % à 0,4%) puis est mise en forme avant frittage à des températures comprises entre 1200°C et 1500°C pendant 5 heures sous atmosphère d'argon-hydrogène (2% de $H_2$). Différents rapports (acide citrique/nitrates) et (U/U+Th) ont été testés, ce qui a permis d'arriver aux conclusions suivantes :

- pour des teneurs (U/U+Th)≥0,5, un mélange biphasique comprenant un oxyde mixte d'uranium et de thorium et $U_3O_8$ est obtenu à l'issue de la combustion; et
- pour des teneurs (U/U+Th)≤0,5 et uniquement pour ces teneurs, une solution solide d'oxyde d'uranium et de thorium est obtenue à l'issue de la combustion.

Ainsi, dans les procédés connus de préparation d'oxydes mixtes comprenant de l'uranium par synthèse par combustion de solution, mis à part le cas spécifique mentionné dans un domaine de compositions restreint, il ressort que la formation d'une solution solide d'oxyde d'uranium et d'un autre élément actinide nécessite deux étapes : une première étape de formation d'un mélange de phases ($UO_3$ et/ou $U_3O_8$ + $AnO_2$) (An étant un élément actinide) et une deuxième étape de formation d'une solution solide $(U,An)O_2$ ou d'un mélange d'oxydes ($UO_2$ + $AnO_2$) par traitement thermique supplémentaire du mélange de phases à l'issue de la combustion en tant que telle.

Au vu de ce qui précède, il existe donc un besoin encore non satisfait pour un procédé permettant d'obtenir, en une seule étape de traitement d'une solution par combustion, des oxydes mixtes d'uranium et d'au moins un autre élément actinide et/ou lanthanide sous forme de solutions solides à partir d'une solution comprenant de l'uranium et au moins un autre élément actinide et/ou lanthanide, et ce quelle que soit la proportion de l'uranium par rapport à l'autre élément.

## EXPOSÉ DE L'INVENTION

Les inventeurs ont découvert, de manière surprenante, qu'en utilisant un combustible spécifique, qui est la glycine, en une quantité prédéterminée spécifique, il est possible d'obtenir, en une seule étape les oxydes mixtes susmentionnés.

Ainsi, l'invention a trait à un procédé de préparation d'une poudre d'une solution solide de dioxyde d'uranium et d'au moins un autre élément actinide et/ou lanthanide comprenant une étape de combustion d'une solution comprenant du nitrate d'uranyle et au moins un nitrate de l'autre élément actinide et/ou lanthanide et un combustible azoté, qui est la glycine, ledit combustible azoté étant utilisé selon une quantité prédéterminée pour former, à l'issue de cette étape, ladite solution solide, cette quantité prédéterminée étant, avantageusement une quantité sur-stoechiométrique de combustible azoté par rapport au nitrate d'uranyle, cette quantité prédéterminée étant, avantageusement, obtenue par la mise en oeuvre des opérations suivantes :

a) une opération de détermination de l'équation de combustion du nitrate d'uranyle, à laquelle on affecte un facteur $\varphi_U$ au coefficient stoechiométrique du combustible azoté ;

b) une opération de détermination d'une quantité sur-stoechiométrique du combustible azoté (dite $Q_U$) en multipliant la quantité connue de nitrate d'uranyle par le coefficient stoechiométrique du combustible azoté et par le facteur $\varphi_U$, celui-ci étant fixé à une valeur supérieure à 1 et, de préférence, à une valeur allant de 1,5 à 1,7 ;

c) une opération de détermination de l'équation de combustion du nitrate de l'autre élément actinide et/ou lanthanide, à laquelle l'on affecte un facteur ($\varphi_{An/Ln}$ au coefficient stoechiométrique du combustible azoté ;

d) une opération de détermination d'une quantité du combustible azoté (dite $Q_{An/Ln}$), en multipliant la quantité connue du nitrate de l'autre élément par le coefficient stoechiométrique du combustible azoté et par le facteur $\varphi_{An/Ln}$, celui-ci étant fixé à une valeur inférieure à 2 ;

e) une opération d'obtention de la quantité prédéterminée susmentionnée en additionnant au moins les quantités de combustible azoté déterminées dans les opérations b) et d) (à savoir, $Q_U$ et $Q_{An/Ln}$).

Avant d'entrer plus en avant dans cet exposé, nous précisons les définitions suivantes.

Par solution solide, on entend un mélange d'uranium et d'au moins un autre élément actinide et/ou lanthanide formant un solide homogène monophasé de type dioxyde.

Par dioxyde d'uranium et d'au moins un élément actinide et/ou lanthanide, on entend, par exemple, un composé pouvant être représenté par la formule général suivante $(U, An/Ln)O_{2\pm x}$, An et Ln représentant respectivement un élément actinide et un élément lanthanide, l'uranium, l'élément actinide et/ou l'élément lanthanide pouvant être présents en différentes proportions et x pouvant aller de 0 à 0,25.

Par quantité prédéterminée, on entend une quantité qui aura été préalablement choisie de sorte à obtenir ladite solution.

Par quantité sur-stoechiométrique de combustible azoté par rapport au nitrate d'uranyle , cela signifie que le combustible azoté est présent, initialement (c'est-à-dire avant que la réaction de combustion ne démarre) en excès par rapport au nitrate d'uranyle.

Ainsi, la quantité prédéterminée de combustible azoté à ajouter à la solution de nitrates susmentionnée correspond, avantageusement, comme mentionné ci-dessus, au moins, à la somme ($Q_u$+$Q_{An/Ln}$), cette quantité prédéterminée correspondant à une quantité sur-stoechiométrique de combustible azoté par rapport au nitrate d'uranyle (cette quantité sur-stoechiométrique étant bien entendu supérieure à celle déterminée à l'étape b) du fait de l'ajout de la quantité $Q_{An/Ln}$).

Comme mentionné ci-dessus, la quantité sur-stoechiométrique de l'étape b) est déterminée, de préférence, par rapport à l'équation de combustion du nitrate d'uranyle en présence dudit combustible, les produits de la réaction étant le dioxyde d'uranium, du dioxyde de carbone, de l'eau (sous forme de vapeur) et du diazote et éventuellement un ou plusieurs autres gaz de recombinaison.

Pour ce faire, il suffit dans l'équation de combustion du nitrate d'uranyle d'affecter au coefficient stoechiométrique du combustible azoté un facteur $\varphi_U$ supérieur à 1, de préférence allant de 1,5 à 1,7, ce facteur $\varphi_U$ pouvant être qualifié de « richesse de mélange » affectée au nitrate d'uranyle.

Pour exemple, en utilisant de la glycine, l'équation de combustion du nitrate d'uranyle peut s'écrire selon l'une des manières suivantes :

$$UO_2(NO_3)_2.nH_2O_{(c)} + (\frac{10}{9}\varphi_U)CH_2NH_2CO_2H_{(c)} + (\frac{5}{2}\varphi_U - \frac{267}{100})O_{2(g)}$$

$$\rightarrow \frac{1}{3}U_3O_{8(c)} + (\frac{20}{9}\varphi_U)CO_{2(g)} + (\frac{25}{9}\varphi_U + n)H_2O_{(g)} + (\frac{5}{9}\varphi_U + 1)N_{2(g)}$$

ou

$$UO_2(NO_3)_2.nH_2O_{(c)} + (\frac{10}{9}\varphi_U)CH_2NH_2CO_2H_{(c)} + (\frac{5}{2}\varphi_U - 3)O_{2(g)}$$

$$\rightarrow UO_{2(c)} + (\frac{20}{9}\varphi_U)CO_{2(g)} + (\frac{25}{9}\varphi_U + n)H_2O_{(g)} + (\frac{5}{9}\varphi_U + 1)N_{2(g)}$$

n représentant le nombre de moles d'hydratation du nitrate d'uranyle.

A cette quantité sur-stœchiométrique obtenue à l'étape b), est ajoutée au moins une quantité de combustible azoté par rapport au nitrate de l'autre élément actinide et/ou lanthanide pour obtenir, au final, la quantité prédéterminée de combustible azoté. Pour obtenir cette quantité de combustible azoté par rapport au nitrate de l'autre élément actinide et/ou lanthanide, il suffit, dans l'équation de combustion du nitrate de l'autre élément actinide et/ou lanthanide d'affecter au coefficient stœchiométrique du combustible un facteur $\varphi_{An/Ln}$ inférieur à 2.

Sans être lié par la théorie, l'utilisation d'un excès de combustible azoté par rapport au nitrate d'uranyle permet la formation *in situ* de gaz réducteurs en quantité suffisante et, ce même en présence d'air, pour réduire l'uranium (VI) en uranium (IV), ce dernier se trouvant ainsi inclus dans la solution solide de dioxyde, l'uranium ne se trouvant ainsi plus sous forme de $U_3O_8$ comme cela est le cas avec des procédés de combustion de l'art antérieur.

Le nitrate d'uranyle est un nitrate d'uranium (VI), à savoir un nitrate de formule $UO_2(NO_3)_2.xH_2O$, x correspondant au nombre de moles d'eau d'hydratation du nitrate d'uranyle, x pouvant aller de 0 à 6.

Le nitrate de l'autre élément actinide et/ou lanthanide peut être :

*lorsqu'il est un nitrate d'élément actinide :

- un nitrate de plutonium et, plus spécifiquement, le nitrate de plutonium (IV) (qui est le degré d'oxydation du plutonium le plus stable en milieu nitrique) ;
- un nitrate d'un actinide mineur et, plus spécifiquement, le nitrate d'américium (III) (qui est le degré d'oxydation de l'américium le plus stable en milieu nitrique), le nitrate de curium (III) (qui est le degré d'oxydation du curium le plus stable en milieu nitrique) ou le nitrate de neptunium (IV), (V) ou (VI) (qui sont les degrés d'oxydation du neptunium les plus stables en milieu nitrique) ; et/ou
- le nitrate de thorium (IV) ; et

*lorsqu'il est un nitrate d'élément lanthanide, un nitrate de lanthanide (III) ou (IV), tel que le nitrate de cérium (III) ou (IV).

Il est à noter que le procédé de l'invention est particulièrement adapté pour des nitrates d'actinides et/ou lanthanides à leur(s) degré(s) d'oxydation le plus stable en milieu nitrique.

L'étape de combustion du procédé de l'invention peut consister en une opération de chauffage progressif de la solution jusqu'à la température d'ignition (à savoir, la température de démarrage de la réaction de combustion), cette température d'ignition pouvant s'échelonner de 50 à 1000°C.

L'étape de combustion du procédé de l'invention peut être, avantageusement, réalisée en présence d'air.

Le procédé de l'invention de l'invention peut comprendre, en outre, avant l'étape de combustion, une étape de préparation de la solution comprenant du nitrate d'uranyle et au moins un nitrate de l'autre élément actinide et/ou lanthanide et un combustible azoté, cette étape pouvant consister à ajouter à une première solution comprenant uniquement le nitrate d'uranyle et au moins un nitrate de l'autre élément actinide et/ou lanthanide la quantité prédéterminée de combustible azoté, cette quantité ayant été prédéterminée, par exemple, de la façon explicitée ci-dessus.

Le procédé de l'invention permet l'obtention de poudres de solution solide de dioxyde d'uranium et d'au moins un autre élément actinide et/ou lanthanide, ces poudres pouvant être utilisées pour réaliser des pastilles de combustible nucléaire.

Pour ce faire, les poudres obtenues peuvent être soumises à un frittage en vue d'obtenir lesdites pastilles.

D'autres caractéristiques apparaîtront mieux à la lecture du complément de description qui suit, lequel se rapporte à des exemples de fabrication de poudres conformes à l'invention.

Bien entendu, les exemples qui suivent ne sont donnés qu'à titre d'illustration de l'objet de l'invention et ne constituent, en aucun cas, une limitation de cet objet.

## BRÈVE DESCRIPTION DES DESSINS

La figure 1 est un diffractogramme aux rayons X des poudres obtenues selon les essais a) à h) de l'exemple 1.
La figure 2 est un diffractogramme aux rayons X des poudres obtenues selon les essais a) à f) de l'exemple 2.
La figure 3 est un diffractogramme aux rayons X des poudres obtenues selon les essais a) et c) de l'exemple 3.

## EXPOSÉ DÉTAILLÉ D'UN MODE DE RÉALISATION PARTICULIER

### EXEMPLE 1

Cet exemple illustre différents essais pour la préparation d'une solution solide de dioxyde d'uranium et de thorium $(U_yTh_{1-y})O_{2\pm x}$ avec y allant de 0,1 à 0,9 et x de 0 à 0,25 à partir de différentes solutions de nitrate d'uranyle et de nitrate de thorium et d'un combustible azoté spécifique : la glycine.

Les différentes solutions testées sont les suivantes :

- une solution de nitrate d'uranyle et de nitrate de thorium, pour laquelle le rapport molaire (U/U+Th) est égal à 0,1 (Essai a) ;
- une solution de nitrate d'uranyle et de nitrate de thorium, pour laquelle le rapport molaire (U/U+Th) est égal à 0,2 (Essai b) ;
- une solution de nitrate d'uranyle et de nitrate de thorium, pour laquelle le rapport molaire (U/U+Th) est égal à 0,35 (Essai c) ;
- une solution de nitrate d'uranyle et de nitrate de thorium, pour laquelle le rapport molaire (U/U+Th) est égal à 0,5 (Essai d) ;
- une solution de nitrate d'uranyle et de nitrate de thorium, pour laquelle le rapport molaire (U/U+Th) est égal à 0,65 (Essai e) ;
- une solution de nitrate d'uranyle et de nitrate de thorium, pour laquelle le rapport molaire (U/U+Th) est égal à 0,7 (Essai f) ;
- une solution de nitrate d'uranyle et de nitrate de thorium, pour laquelle le rapport molaire (U/U+Th) est égal à 0,8 (Essai g) ; et
- une solution de nitrate d'uranyle et de nitrate de thorium, pour laquelle le rapport molaire (U/U+Th) est égal à 0,9 (Essai h).

Avant de réaliser ces essais, un essai préliminaire a été réalisé uniquement avec une solution de nitrate d'uranyle, de sorte à déterminer la teneur de glycine, pour laquelle il ne se forme que du dioxyde d'uranium $UO_2$. Cette teneur de glycine est déterminée dans un intervalle allant de 1,5 à 1,7 fois la quantité stoechiométrique (soit $\varphi_U$ allant de 1,5 à 1,7) établie à partir de l'équation de combustion suivante :

$$UO_2(NO_3)_2.6H_2O_{(c)} + (\frac{10}{9}\varphi_U)CH_2NH_2CO_2H_{(c)} + (\frac{5}{2}\varphi_U - 3)O_{2(g)}$$

$$\rightarrow UO_{2(c)} + (\frac{20}{9}\varphi_U)CO_{2(g)} + (\frac{25}{9}\varphi_U + 6)H_2O_{(g)} + (\frac{5}{9}\varphi_U + 1)N_{2(g)}$$

### 1° Essai a

Une solution de nitrate d'uranyle et de nitrate de thorium pour laquelle le rapport molaire (U/U+Th) est égal à 0,1 a été utilisée dans le cadre de cet essai, le rapport molaire susmentionné pouvant être obtenu en mélangeant 1 mL d'une solution mère comprenant 1 mol.L$^{-1}$ en uranium et 9 mL d'une solution mère comprenant 1 mol.L$^{-1}$ en thorium.

Les équations de combustion du nitrate d'uranyle et du nitrate de thorium utilisées dans le cadre de cet exemple sont les suivantes :

*pour le nitrate d'uranyle :

$$UO_2(NO_3)_2.6H_2O_{(c)} + (\frac{10}{9}\varphi_U)CH_2NH_2CO_2H_{(c)} + (\frac{5}{2}\varphi_U - 3)O_{2(g)}$$

$$\rightarrow UO_{2(c)} + (\frac{20}{9}\varphi_U)CO_{2(g)} + (\frac{25}{9}\varphi_U + 6)H_2O_{(g)} + (\frac{5}{9}\varphi_U + 1)N_{2(g)}$$

*pour le nitrate de thorium :

$$Th(NO_3)_4.5H_2O_{(c)} + (\frac{20}{9}\varphi_{Th})CH_2NH_2CO_2H_{(c)} + 5(\varphi_{Th} - 1)O_{2(g)}$$

$$\rightarrow ThO_{2(c)} + (\frac{40}{9}\varphi_{Th})CO_{2(g)} + (\frac{50}{9}\varphi_{Th} + 5)H_2O_{(g)} + (\frac{10}{9}\varphi_{Th} + 2)N_{2(g)}$$

En partant des équations de combustion mentionnées ci-dessus et en fixant le paramètre $\varphi_U$=1,7 (qui correspond à un excès de combustible par rapport à l'uranium) et $\varphi_{Th}$=0,54 pour le thorium, on détermine la quantité de glycine $Q_{Gly}$ à ajouter à la solution susmentionnée par l'équation suivante :

$$Q_{gly}=Q_u+Q_{Th}$$

avec :

*$Q_U$=y*[(10/9)*1,7] (y correspondant à la teneur molaire en uranium, soit 0,1 dans cet essai et le coefficient (10/9)*1,7 déterminé à partir de l'équation de combustion correspondant au nombre de moles de glycine à ajouter à la solution par rapport au nombre de moles d'uranium ; et
*$Q_{Th}$=(1-y)[(20/9)*0,54], y correspondant à la même définition que celle donnée ci-dessus et le coefficient (20/9)*0,54 déterminé à partir de l'équation de combustion correspondant au nombre de moles de glycine à ajouter à la solution par rapport au nombre de moles de thorium,

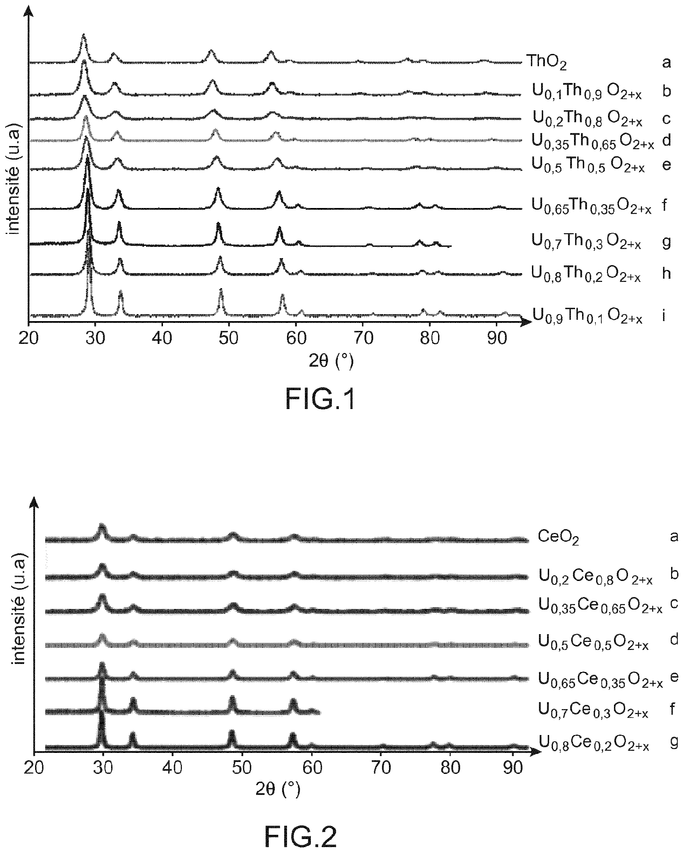

$Q_{gly}$ correspondant à la quantité prédéterminée mentionnée dans la description ci-dessus.
La quantité prédéterminée $Q_{gly}$ est ajoutée à la solution comprenant du nitrate d'uranyle et du nitrate de thorium.
La solution résultante est chauffée progressivement sur une plaque chauffante sous air, de manière à l'évaporer (soit 1 heure à 80°C) jusqu'à l'obtention d'un gel, et à initier la combustion (la température d'ignition étant de l'ordre de 200°C).
Une fois la réaction de combustion initiée, le chauffage est stoppé, car la réaction de combustion est une réaction auto-propageante.
Le produit de la combustion est une poudre, qui a été analysée par diffraction aux rayons X, démontrant que la poudre est une solution solide de formule $(U_{0,1}Th_{0,9})O_{2+x}$, x allant de 0 à 0,25 (voir courbe b) de la figure 1).
Le diffractogramme du $ThO_2$ présente les raies caractéristiques de la structure cubique face centrée. On retrouve ces mêmes raies, avec un décalage vers les hauts angles, caractéristique de l'insertion d'uranium dans la structure.

2°) Essai b

Une solution de nitrate d'uranyle et de nitrate de thorium pour laquelle le rapport molaire (U/U+Th) est égal à 0,2 est utilisée dans cet essai. Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.
La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant, ainsi, de 0,2*[(10/9)*1,7] + 0,8*[(20/9)*0,54].
Le produit de la combustion est une poudre, qui a été analysée par diffraction aux rayons X, démontrant que la poudre est une solution solide de formule $(U_{0,2}Th_{0,8})O_{2+x}$, x allant de 0 à 0,25 (voir courbe c) de la figure 1).

Les teneurs en azote et carbone résiduels ont été mesurées et sont les suivantes :

- 0,42±0,04 % pour le carbone ;
- 1,93±0,16% pour l'azote.

### 3° Essai c

Une solution de nitrate d'uranyle et de nitrate de thorium pour laquelle le rapport (U/U+Th) est égal à 0,35 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de $0,35*[(10/9)*1,7] + 0,65*[(20/9)*0,54]$.

Le produit de la combustion est une poudre, qui a été analysée par diffraction aux rayons X, démontrant que la poudre est une solution solide de formule $(U_{0,35}Th_{0,65})O_{2+x}$, x allant de 0 à 0,25 (voir courbe d) de la figure 1).

### 4° Essai d

Une solution de nitrate d'uranyle et de nitrate de thorium pour laquelle le rapport (U/U+Th) est égal à 0,5 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de $0,5*[(10/9)*1,7] + 0,5*[(20/9)*0,54]$.

Le produit de la combustion est une poudre, qui a été analysée par diffraction aux rayons X, démontrant que la poudre est une solution solide de formule $(U_{0,5}Th_{0,5})O_{2+x}$, x allant de 0 à 0,25 (voir courbe e) de la figure 1).

Les teneurs en azote et carbone résiduels ont été mesurées et sont les suivantes :

- 0,34±0,01 % pour le carbone ;
- 1,16±0,11% pour l'azote.

### 5° Essai e

Une solution de nitrate d'uranyle et de nitrate de thorium pour laquelle le rapport (U/U+Th) est égal à 0,65 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de $0,65*[(10/9)*1,7] + 0,35*[(20/9)*0,54]$.

Le produit de la combustion est une poudre, qui a été analysée par diffraction aux rayons X, démontrant que la poudre est une solution solide de formule $(U_{0,65}Th_{0,35})O_{2+x}$, x allant de 0 à 0,25 (voir courbe f) de la figure 1).

### 6°) Essai f

Une solution de nitrate d'uranyle et de nitrate de thorium pour laquelle le rapport (U/U+Th) est égal à 0,7 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de 0,7*[(10/9)*1,7] + 0,3*[(20/9)*0,54].

Le produit de la combustion est une poudre, qui a été analysée par diffraction aux rayons X, démontrant que la poudre est une solution solide de formule $(U_{0,7}Th_{0,3})O_{2+x}$, x allant de 0 à 0,25 (voir courbe g) de la figure 1).

7° Essai g

Une solution de nitrate d'uranyle et de nitrate de thorium pour laquelle le rapport (U/U+Th) est égal à 0,8 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de 0,8*[(10/9)*1,7] + 0,2*[(20/9)*0,54].

Le produit de la combustion est une poudre, qui a été analysée par diffraction aux rayons X, démontrant que la poudre est une solution solide de formule $(U_{0,8}Th_{0,2})O_{2+x}$, x allant de 0 à 0,25 (voir courbe h) de la figure 1).

Les teneurs en azote et carbone résiduels ont été mesurées et sont les suivantes :

- 0,50±0,04 % pour le carbone ;
- 0,98±0,06% pour l'azote.

8°) Essai h

Une solution de nitrate d'uranyle et de nitrate de thorium pour laquelle le rapport (U/U+Th) est égal à 0,9 est utilisée pour cet essai.

Cette solution est préparée à partir d'une solution mère de nitrate d'uranyle et d'une solution mère de nitrate de thorium de concentrations connues. Le volume nécessaire de chaque solution mère est prélevé, de manière à atteindre le rapport molaire (U/U+Th) désiré.

La solution est traitée dans les mêmes conditions que pour l'essai a), avec un même coefficient $\varphi_U$ par rapport à l'uranium et un même coefficient $\varphi_{Th}$ par rapport au thorium, la quantité de glycine à ajouter pour cet essai étant de 0,9*[(10/9)*1,7] + 0,1*[(20/9)*0,54].

Le produit de la combustion est une poudre, qui a été analysée par diffraction aux rayons X, démontrant que la poudre est une solution solide de formule $(U_{0,9}Th_{0,1})O_{2+x}$, x allant de 0 à 0,25 (voir courbe i) de la figure 1).

Il ressort de ces essais, qu'avec un excès de combustible par rapport à l'uranium, il est obtenu une solution solide de dioxyde d'uranium et de thorium pour des teneurs d'uranium allant de 10 à 90%.

EXEMPLE 2

Cet exemple illustre différents essais pour la préparation d'une solution solide de dioxyde d'uranium et de cérium $(U_yCe_{1-y})O_{2\pm x}$, y allant de 0,2 à 0,8 et x allant de 0 à 0,25 à partir de différentes solutions de nitrate d'uranyle et de nitrate de cérium et d'un combustible azoté spécifique : la glycine.

Les différentes solutions testées sont les suivantes :

- une solution de nitrate d'uranium (VI) et de nitrate de cérium (III), pour laquelle le rapport molaire (U/U+Ce) est égal à 0,2 (Essai a) ;
- une solution de nitrate d'uranium (VI) et de nitrate de cérium (III), pour laquelle le rapport molaire (U/U+Ce) est égal à 0,35 (Essai b) ;
- une solution de nitrate d'uranium (VI) et de nitrate de cérium (III), pour laquelle le rapport molaire (U/U+Ce) est égal à 0,5 (Essai c) ;
- une solution de nitrate d'uranium (VI) et de nitrate de cérium (III), pour laquelle le rapport molaire (U/U+Ce) est égal à 0,65 (Essai d) ;
- une solution de nitrate d'uranium (VI) et de nitrate de cérium (III), pour laquelle le rapport molaire (U/U+Ce) est égal à 0,7 (Essai e) ; et
- une solution de nitrate d'uranium (VI) et de nitrate de cérium (III), pour laquelle le rapport molaire (U/U+Ce) est égal à 0,8 (Essai f).

Les équations de combustion du nitrate d'uranyle et du nitrate de cérium utilisées dans le cadre de cet exemple sont les suivantes :

*pour le nitrate d'uranyle :

$$UO_2(NO_3)_2.6H_2O_{(c)} + (\frac{10}{9}\varphi_U)CH_2NH_2CO_2H_{(c)} + (\frac{5}{2}\varphi_U - 3)O_{2(g)}$$

$$\rightarrow UO_{2(c)} + (\frac{20}{9}\varphi_U)CO_{2(g)} + (\frac{25}{9}\varphi_U + 6)H_2O_{(g)} + (\frac{5}{9}\varphi_U + 1)N_{2(g)}$$

*pour le nitrate de cérium :

$$Ce(NO_3)_3.6H_2O_{(c)} + (\frac{15}{9}\varphi_{Ce})CH_2NH_2CO_2H_{(c)} + (\frac{15}{4}\varphi_{Ce} - \frac{7}{2})O_{2(g)}$$

$$\rightarrow CeO_{2(c)} + (\frac{30}{9}\varphi_{Ce})CO_{2(g)} + (\frac{25}{6}\varphi_{Ce} + 6)H_2O_{(g)} + (\frac{5}{6}\varphi_{Ce} + \frac{3}{2})N_{2(g)}$$

En partant des équations de combustion mentionnées ci-dessus et en fixant le paramètre $\varphi_U$=1,7 (qui correspond à un excès de combustible par rapport à l'uranium) et $\varphi_{Ce}$=0,54 pour le cérium, on détermine la quantité de glycine $Q_{Gly}$ à ajouter à la solution susmentionnée par l'équation suivante :

$$Q_{gly}=Q_u+Q_{Ce}$$

avec :

-$Q_U$=y*[(10/9)*1,7] (y correspondant à la teneur molaire en uranium, et le coefficient (10/9)*1,7 déterminé à partir de l'équation de combustion correspondant au nombre de moles de glycine à ajouter à la solution par rapport au nombre de moles d'uranium ; et

-$Q_{Ce}$=(1-y)[(15/9)*0,54], y correspondant à la même définition que celle donnée ci-dessus et le coefficient (15/9)*0,54 déterminé à partir de l'équation de combustion correspondant au nombre de moles de glycine à ajouter à la solution par rapport au nombre de moles de cérium,

$Q_{gly}$ correspondant à la quantité prédéterminée mentionnée dans la description ci-dessus.

1°) Essai a

Une solution de nitrate d'uranyle et de nitrate de cérium pour laquelle le rapport molaire (U/U+Ce) est égal à 0,2 est utilisée dans cet essai. Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

Au regard du paragraphe introductif de l'exemple 2, la quantité de glycine à ajouter pour cet essai est de 0,2*[(10/9)*1,7] + 0,8*[(15/9)*0,54].

La quantité de glycine ainsi déterminée est ajoutée à la solution susmentionnée.

La solution résultante est évaporée sur une plaque chauffante sous air (1 heure à 80°C) jusqu'à l'obtention d'un gel, puis la température de la plaque est augmentée jusqu'à initiation de la combustion (la température d'ignition étant de l'ordre de 200°C). Le même résultat est obtenu par un chauffage direct et progressif de la solution jusqu'à la température d'ignition.

Une fois la réaction de combustion initiée, le chauffage est stoppé, car la réaction de combustion est une réaction auto-propageante.

Le produit de la combustion est une poudre, qui a été analysée par diffraction aux rayons X, démontrant que la poudre est une solution solide de formule $U_{0,2}Ce_{0,8}O_{2+x}$, x allant de 0 à 0,25 (voir courbe b) de la figure 2).

Le diffractogramme du $CeO_2$ présente les raies caractéristiques de la structure cubique face centrée. On retrouve ces mêmes raies, avec un décalage vers les hauts angles, caractéristique de l'insertion d'uranium dans la structure.

Les teneurs en azote et carbone résiduels ont été mesurées et sont les suivantes :

- 0,37±0,03 % pour le carbone ;
- 1,76±0,14% pour l'azote.

#### 2°) Essai b

Une solution de nitrate d'uranium (VI) et de nitrate de cérium (III) pour laquelle le rapport molaire (U/U+Ce) est égal à 0,35 est utilisée dans cet essai.

Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

La solution est traitée dans les mêmes conditions que pour l'essai a), avec un même coefficient $\varphi_U$ par rapport à l'uranium et un même coefficient $\varphi_{Ce}$ par rapport au cérium, la quantité de glycine ajoutée pour cet essai étant de 0,35*[(10/9)*1,7] + 0,65*[(15/9)*0,54].

Le produit de la combustion est une poudre, qui a été analysée par diffraction aux rayons X, démontrant que la poudre est une solution solide de formule $(U_{0,35}Ce_{0,65})O_{2+x}$, x allant de 0 à 0,25 (voir courbe c) de la figure 2).

#### 3°) Essai c

Une solution de nitrate d'uranium (VI) et de nitrate de cérium (III) pour laquelle le rapport molaire (U/U+Ce) est égal à 0,5 est utilisée dans cet essai.

Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

La solution est traitée dans les mêmes conditions que pour l'essai a), avec un même coefficient $\varphi_U$ par rapport à l'uranium et un même coefficient $\varphi_{Ce}$ par rapport au cérium, la quantité de glycine ajoutée pour cet essai étant de 0,5*[(10/9)*1,7] + 0,5*[(15/9)*0,54].

Le produit de la combustion est une poudre, qui a été analysée par diffraction aux rayons X, démontrant que la poudre est une solution solide de formule $(U_{0,5}Ce_{0,5})O_{2+x}$, x allant de 0 à 0,25 (voir courbe d) de la figure 2).

Les teneurs en azote et carbone résiduels ont été mesurées et sont les suivantes :

- 0,25±0,02 % pour le carbone ;
- 0,84±0,01% pour l'azote.

#### 4° Essai d

Une solution de nitrate d'uranium (VI) et de nitrate de cérium (III) pour laquelle le rapport molaire (U/U+Ce) est égal à 0,65 est utilisée dans cet essai.

Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

La solution est traitée dans les mêmes conditions que pour l'essai a), avec un même coefficient $\varphi_U$ par rapport à l'uranium et un même coefficient $\varphi_{Ce}$ par rapport au cérium, la quantité de glycine ajoutée pour cet essai étant de 0,65*[(10/9)*1,7] + 0,35*[(15/9)*0,54].

Le produit de la combustion est une poudre, qui a été analysée par diffraction aux rayons X, démontrant que la poudre est une solution solide de formule $(U_{0,65}Ce_{0,35})O_{2+x}$, x allant de 0 à 0,25 (voir courbe e) de la figure 2).

#### 5°) Essai e

Une solution de nitrate d'uranium (VI) et de nitrate de cérium (III) pour laquelle le rapport molaire (U/U+Ce) est égal à 0,7 est utilisée dans cet essai.

Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

La solution est traitée dans les mêmes conditions que pour l'essai a), avec un même coefficient $\varphi_U$ par rapport à l'uranium et un même coefficient $\varphi_{Ce}$ par rapport au cérium, la quantité de glycine ajoutée pour cet essai étant de 0,7*[(10/9)*1,7] + 0,3*[(15/9)*0,54].

Le produit de la combustion est une poudre, qui a été analysée par diffraction aux rayons X, démontrant que la poudre est une solution solide de formule $(U_{0,7}Ce_{0,3})O_{2+x}$, x allant de 0 à 0,25 (courbe f) de la figure 2).

6°) Essai f

Une solution de nitrate d'uranium (VI) et de nitrate de cérium (III) pour laquelle le rapport molaire (U/U+Ce) est égal à 0,8 est utilisée dans cet essai.

Cette solution est préparée à partir d'une solution mère de nitrate d'uranyle et d'une solution mère de nitrate de cérium de concentrations connues. Le volume nécessaire de chaque solution mère est prélevé, de manière à atteindre le rapport molaire (U/U+Ce) désiré.

La solution est traitée dans les mêmes conditions que pour l'essai a), avec un même coefficient $\varphi_U$ par rapport à l'uranium et un même coefficient $\varphi_{Ce}$ par rapport au cérium, la quantité de glycine ajoutée pour cet essai étant de 0,8*[(10/9)*1,7] + 0,2*[(15/9)*0,54].

Le produit de la combustion est une poudre, qui a été analysée par diffraction aux rayons X, démontrant que la poudre est une solution solide de formule $(U_{0,8}Ce_{0,2})O_{2+x}$, x allant de 0 à 0,25 (voir courbe g) de la figure 2).

Les teneurs en azote et carbone résiduels ont été mesurées et sont les suivantes :

- 0,37±0,03 % pour le carbone ;
- 1,76±0,14% pour l'azote.

Il ressort de ces essais, qu'avec un excès de combustible par rapport à l'uranium, il est obtenu une solution solide de dioxyde d'uranium et de cérium pour des teneurs d'uranium allant de 20 à 80%.

EXEMPLE 3

Cet exemple illustre différents essais pour la préparation d'une solution solide de dioxyde d'uranium et de plutonium $(U_yPu_{1-y})O_{2\pm x}$ (y allant de 0,25 à 0,75 et x allant de 0 à 0,25) à partir de différentes solutions de nitrate d'uranium (VI) et de nitrate de plutonium (IV) et d'un combustible azoté spécifique : la glycine.

Les différentes solutions testées sont les suivantes :

- une solution de nitrate d'uranium (VI) et de nitrate de plutonium (IV) pour laquelle le rapport molaire (U/U+Pu) est égal à 0,25 (Essai a) ;
- une solution de nitrate d'uranium (VI) et de nitrate de plutonium (IV) pour laquelle le rapport molaire (U/U+Pu) est égal à 0,5 (Essai b) ; et
- une solution de nitrate d'uranium (VI) et de nitrate de plutonium (IV) pour laquelle le rapport molaire (U/U+Pu) est égal à 0,75 (Essai c).

Les équations de combustion du nitrate d'uranyle et du nitrate de plutonium utilisées dans le cadre de cet exemple sont les suivantes :

*pour le nitrate d'uranyle :

$$UO_2(NO_3)_2.6H_2O_{(c)} + (\frac{10}{9}\varphi_U)CH_2NH_2CO_2H_{(c)} + (\frac{5}{2}\varphi_U - 3)O_{2(g)}$$

$$\rightarrow UO_{2(c)} + (\frac{20}{9}\varphi_U)CO_{2(g)} + (\frac{25}{9}\varphi_U + 6)H_2O_{(g)} + (\frac{5}{9}\varphi_U + 1)N_{2(g)}$$

*pour le nitrate de plutonium :

$$Pu(NO_3)_4.5H_2O_{(c)} + (\frac{20}{9}\varphi_{Pu})CH_2NH_2CO_2H_{(c)} + 5(\varphi_{Pu} - 1)O_{2(g)}$$

$$\rightarrow PuO_{2(c)} + (\frac{40}{9}\varphi_{Pu})CO_{2(g)} + (\frac{50}{9}\varphi_{Pu} + 5)H_2O_{(g)} + (\frac{10}{9}\varphi_{Pu} + 2)N_{2(g)}$$

En partant des équations de combustion mentionnées ci-dessus et en fixant le paramètre à $\varphi_U$=1,7 (qui correspond à un excès de combustible par rapport à l'uranium) et $\varphi_{Pu}$=0,1 pour le plutonium, on détermine la quantité de glycine $Q_{Gly}$ à ajouter à la solution susmentionnée par l'équation suivante :

$$Q_{gly}=Q_u+Q_{Pu}$$

avec :

-$Q_U$=y*[(10/9)*1,7] (y correspondant à la teneur molaire en uranium, et le coefficient (10/9)*1,7 déterminé à partir de l'équation de combustion correspondant au nombre de moles de glycine à ajouter à la solution par rapport au nombre de moles d'uranium ; et

-$Q_{Pu}$=(1-y)[(20/9)*1], y correspondant à la même définition que celle donnée ci-dessus et le coefficient (20/9)*1 déterminé à partir de l'équation de combustion correspondant au nombre de moles de glycine à ajouter à la solution par rapport au nombre de moles de plutonium,

$Q_{gly}$ correspondant à la quantité prédéterminée mentionnée dans la description ci-dessus.

1°) Essai a

Une solution de nitrate d'uranyle (VI) et de nitrate de plutonium (IV) pour laquelle le rapport molaire (U/U+Pu) est égal à 0,25 est utilisée dans cet essai. Cette solution est préparée à partir d'une solution mère de nitrate d'uranyle et d'une solution mère de nitrate de plutonium de concentrations connues. Le volume nécessaire de chaque solution mère est prélevé, de manière à atteindre le rapport molaire (U/U+Pu) désiré.

Au regard du paragraphe introductif de l'exemple 3, la quantité de glycine à ajouter pour cet essai est de 0,25*[(10/9)*1,7] + 0,75*[(20/9)*1].

La quantité de glycine ainsi déterminée est ajoutée à la solution susmentionnée.

La solution résultante est évaporée sur une plaque chauffante sous air (1 heure à 80°C) jusqu'à l'obtention d'un gel, puis la température de la plaque est augmentée jusqu'à initiation de la combustion (la température d'ignition étant de l'ordre de 200°C). Le même résultat est obtenu par un chauffage direct et progressif de la solution jusqu'à la température d'ignition.

Une fois la réaction de combustion initiée, le chauffage est stoppé, car la réaction de combustion est une réaction auto-propageante.

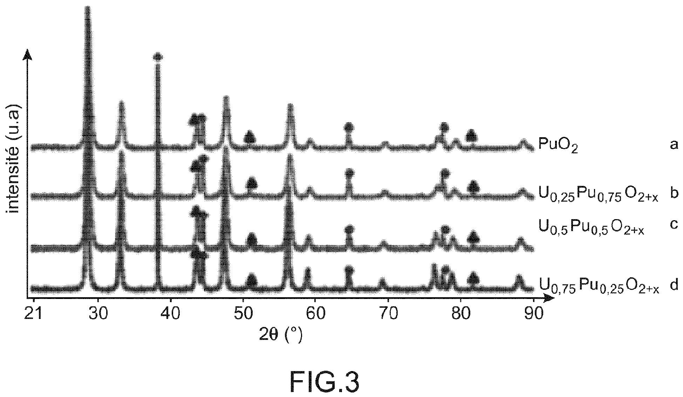

Le produit de la combustion est une poudre, qui a été analysée par diffraction aux rayons X, démontrant que la poudre est une solution solide de formule $U_{0,25}Pu_{0,75}O_{2+x}$, x allant de 0 à 0,25 (voir courbe b) de la figure 3).

Le diffractogramme du $PuO_2$ présente les raies caractéristiques de la structure cubique face centrée. On retrouve ces mêmes raies, avec un décalage vers les hauts angles, caractéristique de l'insertion d'uranium dans la structure.

2°) Essai b

Une solution de nitrate d'uranium (VI) et de nitrate de plutonium (IV) pour laquelle le rapport molaire (U/U+Pu) est égal à 0,5 est utilisée dans cet essai.

Cette solution est préparée à partir d'une solution mère de nitrate d'uranyle et d'une solution mère de nitrate de plutonium de concentrations connues. Le volume nécessaire de chaque solution mère est prélevé, de manière à atteindre le rapport molaire (U/U+Pu) désiré.

La solution est traitée dans les mêmes conditions que pour l'essai a), avec un même coefficient $\varphi_U$ par rapport à l'uranium et un même coefficient $\varphi_{Pu}$ par rapport au plutonium, la quantité de glycine ajoutée pour cet essai étant de 0,5*[(10/9)*1,7] + 0,5*[(20/9)*1].

Le produit de la combustion est une poudre, qui a été analysée par diffraction aux rayons X, démontrant que la poudre est une solution solide de formule $(U_{0,5}Pu_{0,5})O_{2+x}$, x allant de 0 à 0,25 (voir courbe c) de la figure 3).

3°) Essai c

Une solution de nitrate d'uranium (VI) et de nitrate de plutonium (IV) pour laquelle le rapport molaire (U/U+Pu) est égal à 0,75 est utilisée dans cet essai.

Cette solution est préparée à partir d'une solution mère de nitrate d'uranyle et d'une solution mère de nitrate de plutonium de concentrations connues. Le volume nécessaire de chaque solution mère est prélevé, de manière à atteindre le rapport molaire (U/U+Pu) désiré.

La solution est traitée dans les mêmes conditions que pour l'essai a), avec un même coefficient $\varphi_U$ par rapport à l'uranium et un même coefficient $\varphi_{Pu}$ par rapport au plutonium, la quantité de glycine ajoutée pour cet essai étant de 0,75*[(10/9)*1,7] + 0,25*[(20/9)*1].

Le produit de la combustion est une poudre, qui a été analysée par diffraction aux rayons X, démontrant que la poudre est une solution solide de formule $(U_{0,75}Pu_{0,25})O_{2+x}$, x allant de 0 à 0,25 (voir courbe d) de la figure 3).

**Revendications**

1. Procédé de préparation d'une poudre d'une solution solide de dioxyde d'uranium et d'au moins un autre élément actinide et/ou lanthanide comprenant une étape de combustion d'une solution comprenant du nitrate d'uranyle et au moins un nitrate de l'autre élément actinide et/ou lanthanide et un combustible azoté, qui est la glycine, ledit combustible azoté étant utilisé selon une quantité prédéterminée pour former, à l'issue de cette étape, ladite solution solide, cette quantité prédéterminée étant une quantité sur-stoechiométrique de combustible azoté par rapport au nitrate d'uranyle obtenue par la mise en oeuvre des opérations suivantes :

   a) une opération de détermination de l'équation de combustion du nitrate d'uranyle, à laquelle on affecte un facteur $\varphi_U$ au coefficient stoechiométrique du combustible azoté ;
   b) une opération de détermination d'une quantité sur-stoechiométrique du combustible azoté (dite $Q_U$) en multipliant la quantité connue de nitrate d'uranyle par le coefficient stoechiométrique du combustible azoté et par le facteur $\varphi_U$, celui-ci étant fixé à une valeur supérieure à 1 et, de préférence, à une valeur allant de 1,5 à 1,7 ;
   c) une opération de détermination de l'équation de combustion du nitrate de l'autre élément actinide et/ou lanthanide, à laquelle l'on affecte un facteur $\varphi_{An/Ln}$ au coefficient stoechiométrique du combustible azoté ;
   d) une opération de détermination d'une quantité du combustible azoté (dite $Q_{An/Ln}$), en multipliant la quantité connue du nitrate de l'autre élément par le coefficient stoechiométrique du combustible azoté et par le facteur $\varphi_{An/Ln}$, celui-ci étant fixé à une valeur inférieure à 2 ;
   e) une opération d'obtention de la quantité prédéterminée susmentionnée en additionnant au moins les quantités de combustible azoté déterminées dans les opérations b) et d) (à savoir, $Q_U$ et $Q_{An/Ln}$).

2. Procédé de préparation d'une poudre selon la revendication 1, dans lequel le facteur $\varphi_U$ présente une valeur allant de 1,5 à 1,7.

3. Procédé de préparation d'une poudre selon l'une quelconque des revendications précédentes, dans lequel le nitrate de l'autre élément actinide et/ou lanthanide est :

   *lorsqu'il est un nitrate d'élément actinide :

      - un nitrate de plutonium et, plus spécifiquement, le nitrate de plutonium (IV) ;
      - un nitrate d'un actinide mineur et, plus spécifiquement, le nitrate d'américium (III), le nitrate de curium (III) ou le nitrate de neptunium (IV), (V) ou (VI) ; et/ou
      - le nitrate de thorium (IV) ; et

   *lorsqu'il est un nitrate d'élément lanthanide, un nitrate de lanthanide (III) ou (IV), tel que le nitrate de cérium (III) ou (IV).

4. Procédé de préparation d'une poudre selon l'une quelconque des revendications précédentes, dans lequel l'étape de combustion comprend une opération de chauffage progressif de la solution jusqu'à la température d'ignition (à savoir, la température de démarrage de la réaction de combustion).

5. Procédé de préparation d'une poudre selon l'une quelconque des revendications précédentes, comprenant, avant l'étape de combustion, une étape de préparation de la solution comprenant du nitrate d'uranyle et au moins un nitrate de l'autre élément actinide et/ou lanthanide et un combustible azoté.

6. Procédé de préparation d'une poudre selon la revendication 5, dans lequel l'étape de préparation de la solution comprenant du nitrate d'uranyle et au moins un nitrate de l'autre élément actinide et/ou lanthanide et un combustible azoté consiste à ajouter, à une première solution comprenant uniquement le nitrate d'uranyle et au moins un nitrate de l'autre élément actinide et/ou lanthanide, la quantité prédéterminée de combustible azoté.

**Patentansprüche**

1. Verfahren zur Herstellung eines Pulvers einer festen Lösung von Urandioxid und von wenigstens einem anderen Aktinid- und/oder Lanthanidelement, umfassend einen Schritt der Verbrennung einer Lösung, die Uranylnitrat und wenigstens ein Nitrat des anderen Aktinid- und/oder Lanthanidelements und einen stickstoffhaltigen Brennstoff enthält, der Glycin ist, wobei der stickstoffhaltige Brennstoff gemäß einer vorbestimmten Menge verwendet wird, um am Ende dieses Schritts die feste Lösung zu bilden, wobei diese vorbestimmte Menge eine überstöchiometrische Menge von stickstoffhaltigem Brennstoff bezüglich des Uranylnitrats ist, erhalten durch die Durchführung der folgenden Schritte:

   a) einen Schritt der Bestimmung der Verbrennungsgleichung des Uranylnitrats, bei der man einen Faktor $\varphi_U$ auf den stöchiometrischen Koeffizienten des stickstoffhaltigen Brennstoffs anwendet;
   b) einen Schritt der Bestimmung einer überstöchiometrischen Menge des stickstoffhaltigen Brennstoffs (genannt $Q_U$) durch Multiplizieren der bekannten Menge von Uranylnitrat mit dem stöchiometrischen Koeffizienten des stickstoffhaltigen Brennstoffs und mit dem Faktor $\varphi_U$, wobei dieser auf einen Wert größer als 1 festgesetzt wird, und vorzugsweise auf einen Wert, der von 1,5 bis 1,7 geht;
   c) einen Schritt der Bestimmung der Verbrennungsgleichung des Nitrats des anderen Aktinid- und/oder Lanthanidelements, bei der man einen Faktor $\varphi_{An/Ln}$ auf den stöchiometrischen Koeffizienten des stickstoffhaltigen Brennstoffs anwendet;
   d) einen Schritt der Bestimmung einer Menge des stickstoffhaltigen Brennstoffs (genannt $Q_{An/Ln}$) durch Multiplizieren der bekannten Menge des Nitrats des anderen Elements mit dem stöchiometrischen Koeffizienten des stickstoffhaltigen Brennstoffs und mit dem Faktor $\varphi_{An/Ln}$, wobei dieser auf einen Wert kleiner als 2 festgesetzt wird;
   e) einen Schritt des Erhaltens der genannten vorbestimmten Menge durch Addieren wenigstens der Mengen von stickstoffhaltigem Brennstoff, die in den Schritten b) und d) bestimmt werden (nämlich $Q_U$ und $Q_{An/Ln}$).

2. Verfahren zur Herstellung eines Pulvers nach Anspruch 1, wobei der Faktor $\varphi_U$ einen Wert darstellt, der von 1,5 bis 1,7 geht.

3. Verfahren zur Herstellung eines Pulvers nach einem der vorhergehenden Ansprüche, wobei das Nitrat des anderen Aktinid- und/oder Lanthanidelements Folgendes ist:

   * wenn es ein Nitrat eines Aktinidelements ist:

      - ein Plutoniumnitrat, und spezieller das Nitrat von Plutonium (IV);
      - ein Nitrat eines niedrigen Aktinids, und spezieller das Nitrat von Amerizium (III), das Nitrat von Curium (III) oder das Nitrat von Neptunium (IV), (V) oder (VI);
      und/oder
      - das Nitrat von Thorium (IV); und

   * wenn es ein Nitrat eines Lanthanidelements ist, ein Nitrat von Lanthanid (III) oder (IV) wie zum Beispiel das Nitrat von Cerium (III) oder (IV).

4. Verfahren zur Herstellung eines Pulvers nach einem der vorhergehenden Ansprüche, wobei der Schritt der Verbrennung einen Schritt des progressiven Erhitzens der Lösung bis zur Zündtemperatur (nämlich der Starttemperatur der Verbrennungsreaktion) umfasst.

5. Verfahren zur Herstellung eines Pulvers nach einem der vorhergehenden Ansprüche, umfassend vor dem Schritt der Verbrennung einen Schritt der Herstellung der Lösung, die Uranylnitrat und wenigstens ein Nitrat des anderen Aktinid- und/oder Lanthanidelements sowie einen stickstoffhaltigen Brennstoff enthält.

6. Verfahren zur Herstellung eines Pulvers nach Anspruch 5, wobei der Schritt der Herstellung der Lösung, die Uranylnitrat und wenigstens ein Nitrat des anderen Aktinid- und/oder Lanthanidelements und einen stickstoffhaltigen Brennstoff enthält, darin besteht, zu einer ersten Lösung, die ausschließlich das Uranylnitrat und wenigstens ein Nitrat des anderen Aktinid- und/oder Lanthanidelements enthält, die vorbestimmte Menge von stickstoffhaltigem Brennstoff hinzuzufügen.

**Claims**

1. A method for preparing a powder of a solid solution of dioxide of uranium and of at least one other actinide and/or lanthanide element comprising a step for combustion of a solution comprising uranyl nitrate and at least one nitrate of the other actinide and/or lanthanide element and a nitrogen-containing fuel, which is glycine, said nitrogen-containing fuel being used according to a predetermined amount in order to form, at the end of this step, said solid solution, this predetermined amount being an over-stoichiometric amount of nitrogen-containing fuel relative to the uranyl nitrate obtained by applying the following operations:

   a) an operation for determining the combustion equation of uranyl nitrate, to which a factor $\varphi_U$ is assigned to the stoichiometric coefficient of the nitrogen-containing fuel;
   b) an operation for determining an over-stoichiometric amount of the nitrogen-containing fuel (so-called $Q_U$) by multiplying the known amount of uranyl nitrate by the stoichiometric coefficient of the nitrogen-containing fuel and by the factor $\varphi_U$, the latter being set to a value greater than 1 and preferably, to value from 1.5 to 1.7;
   c) an operation for determining the combustion equation of the nitrate of other actinide and/or lanthanide element, to which a factor $\varphi_{An/Ln}$ is assigned to the stoichiometric coefficient of the nitrogen-containing fuel;
   d) an operation for determining an amount of the nitrogen-containing fuel (so-called $Q_{An/Ln}$), by multiplying the known amount of the nitrate of the other element by the stoichiometric coefficient of the nitrogen-containing fuel and by the factor $\varphi_{An/Ln}$, the latter being set to a value below 2;
   e) an operation for obtaining the aforementioned predetermined amount by adding at least the amounts of nitrogen-containing fuel determined in operations b) and d) (i.e. $Q_U$ and $Q_{An/Ln}$).

2. The method for preparing a powder according to claim 1, wherein the factor $\varphi_U$ has a value ranging from 1.5 to 1.7.

3. The method for preparing a powder according to any of the preceding claims, wherein the nitrate of the other actinide and/or lanthanide element is:

   *when it is an actinide element nitrate:

   - a plutonium nitrate and more specifically, plutonium(IV) nitrate;
   - a nitrate of a minor actinide and, more specifically, americium(III) nitrate, curium(III) nitrate or neptunium(IV), (V) or (VI) nitrate; and/or
   - thorium(IV) nitrate; and

   * when it is a lanthanide element nitrate, a lanthanide(III) or (IV) nitrate, such as cerium(III) or (IV) nitrate.

4. The method for preparing a powder according to any of the preceding claims, wherein the combustion step comprises an operation for gradually heating the solution up to the ignition temperature (i.e. the temperature for starting the combustion reaction).

5. The method for preparing a powder according to any of the preceding claims, comprising, before the combustion step, a step for preparing the solution comprising uranyl nitrate and at least one nitrate of another actinide and/or lanthanide element and a nitrogen-containing fuel.

6. The method for preparing a powder according to claim 5, wherein the step for preparing the solution comprising uranyl nitrate and at least one nitrate of the other actinide and/or lanthanide element and a nitrogen-containing fuel consists of adding, to a first solution only comprising uranyl nitrate and at least one nitrate of the other actinide and/or lanthanide element, the predetermined amount of nitrogen-containing fuel.

FIG.1

FIG.2

FIG.3

**EP 3 060 525 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 0451058

### Littérature non-brevet citée dans la description

- *Transactions of the American Nuclear Society,* 1982, vol. 40, 50-52
- *Journal of Nuclear Materials,* 2005, vol. 345, 245-253
- *Journal of Nuclear Materials,* 2000, vol. 278, 346-357